# EUROPÄISCHE PATENTANMELDUNG

(11) **EP 2 777 946 A2**
(43) Veröffentlichungstag der Anmeldung: **17.09.2014**
(21) Anmeldenummer: 14000577.8
(22) Anmeldetag: 19.02.2014
(51) Int. Cl.: B60B 33/00, F16D 55/36, F16D 121/22, F16D 55/00

(54) **Stützrad für ein Flurförderzeug und Flurförderzeug**

(30) Priorität: 21.02.2013 DE 202013001643 U
(71) Anmelder: INTORQ GmbH & Co. KG, 31855 Aerzen (DE)
(72) Erfinder: Meinke, Ulrich, 32657 Lemgo (DE); Jackstreit, Gerhard, 32699 Extertal (DE)
(74) Vertreter: Schober, Mirko

(57) **Zusammenfassung**

Das Stützrad für ein Flurförderzeug weist eine Stützradachse (1) und einen durch mindestens ein Lager (4, 5) um die Stützradachse (1) drehbar gelagerten Stützradkörper (2) auf. Das Stützrad weist eine elektromagnetisch lüftende Lamellenbremse (3) auf.

## Beschreibung

Die Erfindung betrifft ein Stützrad für ein Flurförderzeug und ein Flurförderzeug.

Aus Gründen der Betriebssicherheit steigen die Anforderungen an die Bremswege von Flurförderzeugen. Die Flurförderzeuge der in Rede stehenden Art weisen eine vertikal bewegliche Lastaufnahmevorrichtung auf, unterhalb derer sich Stützräder regelmäßig an gabelartigen Vorsprüngen befinden, die das Flurförderzeug, insbesondere bei aufgenommener Last, abstützen. Neben den Stützrädern weisen derartige Flurförderzeuge zusätzlich mindestens ein Antriebsrad auf, welches regelmäßig auch das lenkbar ausgeführte Rad ist.

Bei konventionellen Flurförderzeugen der in Rede stehenden Art findet neben dem Antrieb auch die Abbremsung über das Antriebsrad statt. Dabei wird im regulären Betrieb normalerweise generatorisch über den Antriebsmotor abgebremst, für abrupte Anbremsvorgänge mit kurzen Bremswegen steht regelmäßig noch eine zusätzliche Motorbremse zur Verfügung.

Nachteilig bei diesen Flurförderzeugen ist jedoch, dass die über das Antriebsrad übertragbaren Bremskräfte begrenzt sind, d.h. der mögliche Mindestbremsweg durch die Kraftübertragung vom Antriebsrad auf den Boden bestimmt wird.

Der Erfindung liegt daher die Aufgabe zugrunde, ein Stützrad mit integrierter Federkraftbremse für ein Flurförderzeug und ein Flurförderzeug anzugeben, welche einen kürzeren Bremsweg des Flurförderzeugs ermöglichen.

Die Aufgabe wird gelöst durch ein Stützrad und ein Flurförderzeug mit den Merkmalen der unabhängigen Ansprüche. Die Merkmale der abhängigen Ansprüche betreffen vorteilhafte Ausführungsformen.

Das erfindungsgemäße Stützrad weist eine elektromagnetisch lüftende Lamellenbremse als Federkraftbremse mit mehreren Reibflächen auf. Durch die Verwendung einer Lamellenbremse wird es möglich, eine Bremse, die in der Lage ist, ein hinreichendes Bremsmoment zu erzeugen, in die Stützräder eines Flurförderzeugs zu integrieren. Da diese regelmäßig unter der Last angeordnet sind, ist der für die Stützräder zur Verfügung stehende Bauraum begrenzt, insbesondere der Durchmesser der regelmäßig rollenförmigen Stützräder ist begrenzt.

Vorteilhafterweise ist dabei die Lamellenbremse rein reibschlüssig. Der Reibschluss ermöglicht ein schonendes Abbremsen der Stützräder, was deren Lebensdauer erhöht.

Vorteilhafterweise weist das Stützrad zwei in radialer Richtung zwischen Stützradachse und Stützradkörper angeordnete Lager auf. Dabei ist vorteilhafterweise die Lamellenbremse in axialer Richtung zwischen den Wälzlagern angeordnet. Diese Anordnung von Lagern und Bremse ermöglicht in vorteilhafter Weise eine kompakte Bauweise. Der Raum zwischen den Lagern kann für das Bremsenpaket genutzt werden, das es ermöglicht, zum Einen die Lager weit nach außen auf der Stützradachse zu positionieren, was im Hinblick auf die Lastaufnahme günstig ist, gleichzeitig ein breites Bremsenpaket auf der Achse unterzubringen.

Weiterhin ist vorteilhafterweise eine Leitung zur Versorgung der Lamellenbremse mit Energie, vorzugsweise elektrischer Energie, vorgesehen. Diese ist vorteilhafterweise zwischen der Stützradachse und dem Lager verlegt. Besonders vorteilhaft ist es, wenn hierfür eine Hülse vorgesehen ist, die dann angeordnet zwischen Stützrachachse und Lager eine geeignete Durchführung für die Leitung aufweist. Eine andere Verlegung zwischen Stützradachse und Lager, beispielsweise indem eine Bohrung in einer inneren Lagerschale oder eine Nut in der Stützradachse vorgesehen wird, ist jedoch auch denkbar.

Besonders vorteilhaft ist, wenn die Lamellenbremse eine Notlüfteinrichtung aufweist. Dabei kann es sich beispielsweise um Schrauben handeln, durch deren Anziehen die Lamellenbremse geöffnet werden kann. Insbesondere bei der vorteilhaften Ausführung der Lamellenbremse als elektromagnetisch lüftende Federkraftbremse ist eine derartige Notlüfteinrichtung sinnvoll, um bei Ausfall der Energieversorgung die Bremse öffnen zu können, beispielsweise um das Flurförderzeug manuell zu bewegen.

Weiterhin ist es vorteilhaft, wenn das Stützrad zwischen Stützradachse und Lager eine Hülse aufweist, die derart gestaltet ist, dass sie die Bedienung der Notlüfteinrichtung ermöglicht. Dabei kann es sich beispielsweise um eine Durchführung für ein Werkzeug handeln, welches zur Bedienung der Notlüfteinrichtung geeignet ist, beispielsweise wenn es sich bei der Notlüfteinrichtung um Inbusschrauben handelt, um eine Durchführung, die groß genug ist, einen Inbusschlüssel aufzunehmen.

Es ist vorteilhaft, wenn ein mit mindestens einem erfindungsgemäßen Stützrad ausgerüstetes Flurförderzeug eine Steuerung aufweist, die dazu eingerichtet ist, bei Bremsungen im Fahrbetrieb die Bremswirkung zunächst über generatorische Abbremsung über den Antriebsmotor zu erzeugen und die Lamellenbremse zum Abbremsen zuzuschalten, wenn eine definierte Geschwindigkeit unterschritten und/oder eine über die Möglichkeiten der generatorischen Abbremsung hinausgehende Bremswirkung erzielt werden soll.

Eine derartige Ansteuerung ist insofern besonders günstig, da wann immer eine generatorische Abbremsung ausreicht, diese eingesetzt wird, welche den Vorteil hat, zum Einen keinen Verschleiß der Bremse herbeizuführen, zum Anderen die Möglichkeit bietet, Energie zurückzugewinnen, die in einer Batterie des Flurförderzeugs gespeichert und dann wieder zum Antreiben des Flurförderzeugs verwendet werden kann. Der Einsatz der Lamellenbremse erfolgt dann erst, wenn dies sinnvoll ist, beispielsweise weil die generatorische Abbremsung unterhalb einer gewissen Geschwindigkeit nicht mehr effizient ist. Weiterhin kommt die Lamellenbremse zum Einsatz, wenn eine erhöhte Bremswirkung gefordert wird, beispielsweise bei einer Notbremsung des Flurförderzeugs. Dann wird die Lamellenbremse bereits zugeschaltet, wenn das Flurförderzeug sich noch mit einer Geschwindigkeit bewegt, bei der beim normalen Bremsbetrieb rein generatorisch über den Antriebsmotor gebremst würde.

Weiterhin ist es vorteilhaft, wenn das Flurförderzeug eine als Stillstands- und/oder Not-Aus-Bremse ausgeführte Bremse aufweist, die auf das Antriebsverhalten des Flurförderzeugs wirkt. Eine derartige Bremse, die dazu dient, das Fahrzeug bei Stillstand festzusetzen, kommt bei einem erfindungsgemäßen Flurförderzeug in vorteilhafter Weise am Antriebsrad zum Einsatz. Hierdurch wird eine zusätzliche Fixierung des Antriebsrads im Stillstand ermöglicht, um eine sichere Fixierung des Flurförderzeugs in jeder Position zu garantieren.

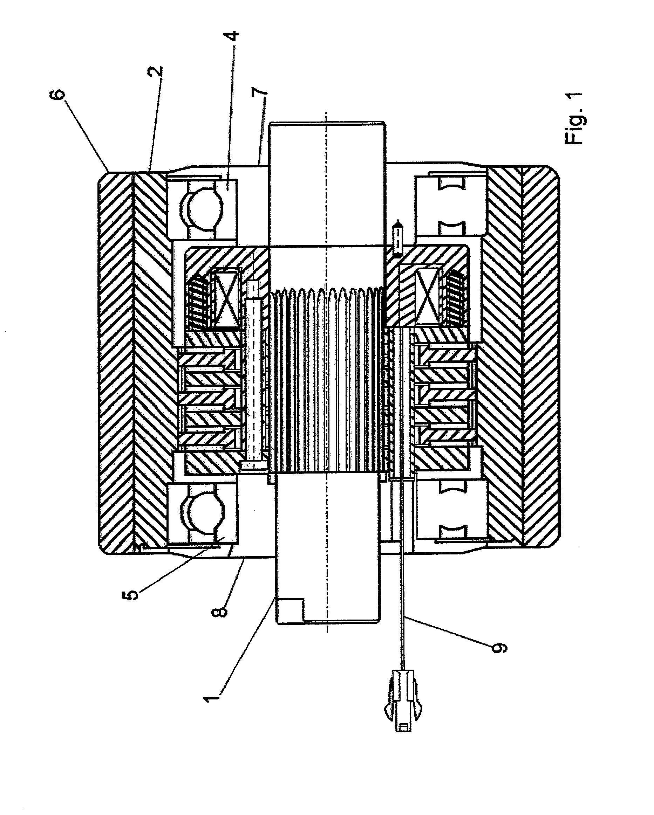

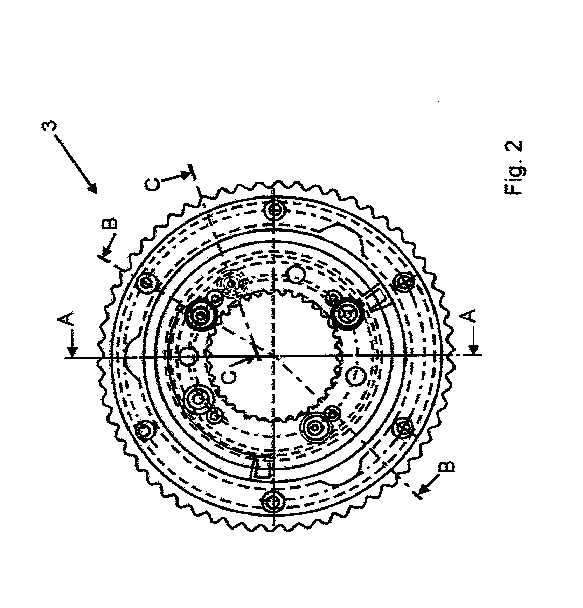

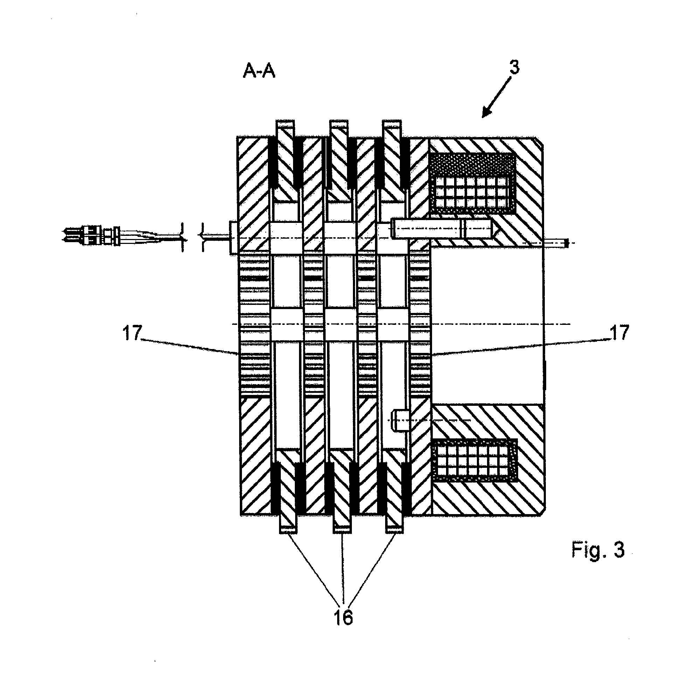

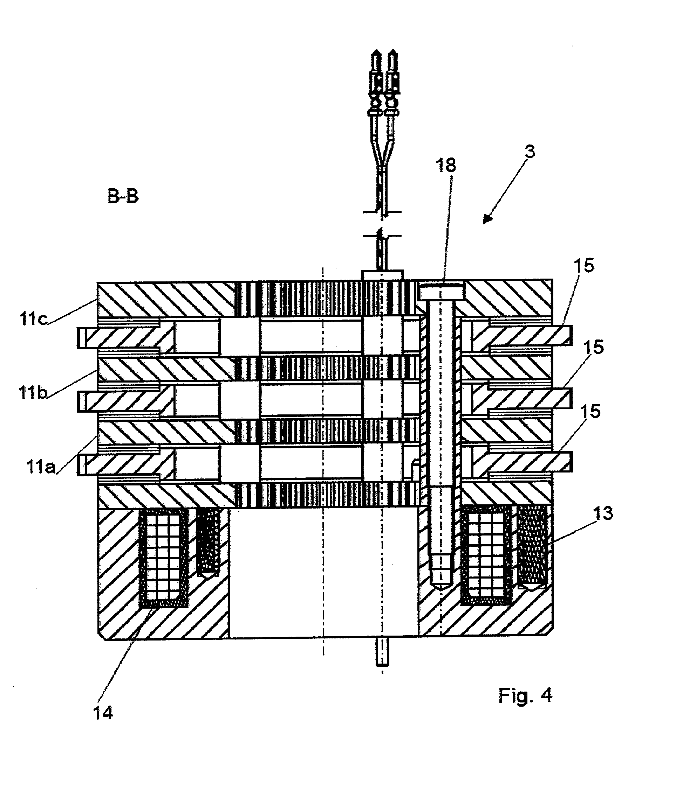

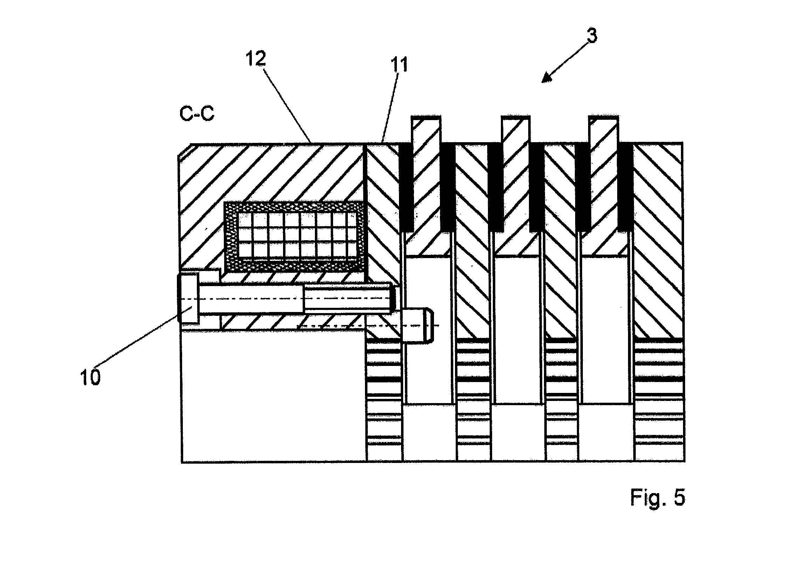

Die Erfindung wird im Folgenden anhand der Figuren 1 bis 5 schematisch näher erläutert.
Figur 1 zeigt eine Schnittdarstellung eines beispielhaften erfindungsgemäßen Stützrades.
Figur 2 zeigt eine Aufsicht auf eine beispielhafte Lamellenbremse für ein erfindungsgemäßes Stützrad.

Die Figuren 3, 4 und 5 zeigen Schnittdarstellungen der in Figur 2 gezeigten Lamellenbremse entlang der in Figur 2 markierten Schnittebenen.

Das erfindungsgemäße Stützrad verfügt über eine Stützradachse 1, auf der der Stützradkörper 2 durch die Lager 4 und 5 drehbar gelagert ist. Dabei sind die Lager 4 und 5 durch die Hülsen 7 und 8, die zwischen Stützradachse 1 und dem jeweiligen Lager 4 oder 5 angeordnet sind, auf der Stützradachse 1 montiert. Dabei weist die Hülse 8 als Besonderheit einen Durchgang auf für die Leitung 9, die zur Energieversorgung der elektromagnetisch lüftenden Lamellenbremse 3 dient. Die Hülse 7 hat einen Durchgang, um den Zugang zur Notlüfteinrichtung 10 an der Lamellenbremse 3 zu ermöglichen, welche in Form von Schrauben realisiert ist. Die Schrauben 10 sind so gestaltet, dass sie das Ankerteil 11 an den Magnetteilflansch 12 der Bremse ziehen können und so die Bremse lüften. Zum Schließen der Bremse sind Federn 13 vorgesehen, welche bei unbestromter Spule 14 des Magnetteils 12 das Ankerteil 11 von dem Magnetteilflansch 12 wegdrücken und so die weiteren Ankerteile 11a, 11b und 11c und die Rotoren 15 aneinanderpressen.

Die Lamellenbremse 3 ist mit dem Stützradkörper 2 über eine Außenverzahnung 16 an den Rotoren 15 derart verbunden, dass die Rotoren 15 verdrehsicher aber axial beweglich mit dem Stützradkörper 2 verbunden sind. Die Ankerteile 11a, 11b und 11c weisen entsprechend eine Verzahnung 17 auf, mit der sie mit der Stützradachse 1 axial verschieblich aber verdrehfest verbunden sind.

In vorteilhafter Weise können Ankerteile 11a, 11b, 11c und Rotoren 15 gasnitrierte Oberflächen aufweisen. Derart harte Oberflächen haben den Vorteil, dass über lange Zeit konstante Bremsmomente erzielt werden können.

Die Lamellenbremse 3 ist als vormontierte Einheit ausgeführt. Sie wird durch die Schrauben 18 zusammengehalten, welche die Ankerteile 11, 11a, 11b und 11c mit dem Magnetteilflansch 12 verbinden. Die so vorgefertigte Lamellenbremse 3 kann in einfacher Weise in ein erfindungsgemäßes Stützrad eingesetzt werden. Vorteilhafterweise weist dies noch eine auf dem Stützradkörper 2 vorgesehene Beschichtung 6 auf, bei der es sich vorzugsweise um eine Beschichtung zur Erhöhung der Bodenhaftung des Stützrades handelt. Um im Betrieb die Höchsttemperatur der Bremse auf einem Niveau zu halten, welche insbesondere im Hinblick auf die Beschichtung 6 unkritisch ist, beispielsweise kann es sich bei der Beschichtung 6 um einen Vukolanbelag handeln, ist eine Ansteuerung mit angepasster Pulsweitenmodulation oder Ähnlichem (z.B. Übererregung) sinnvoll. Hierfür wird zum Lüften der Bremse für einen kurzen Moment, beispielsweise 400 ms, mit verhältnismäßig hoher elektrischer Spannung das Magnetteil versorgt. Anschließend wird die elektrische Leistung mittels der Pulsweitenmodulation zum Geöffnethalten der Bremse reduziert.

## Patentansprüche

1. Stützrad für ein Flurförderzeug, aufweisend eine Stützradachse (1) und einen durch mindestens ein Lager (4, 5) um die Stützradachse (1) drehbar gelagerten Stützradkörper (2),
**dadurch gekennzeichnet,**
**dass** das Stützrad eine elektromagnetisch lüftende Lamellenbremse (3) aufweist.

2. Stützrad nach Anspruch 1,
**dadurch gekennzeichnet,**
**dass** die Lamellenbremse (3) rein reibschlüssig ist.

3. Stützrad nach Anspruch 2 oder 3,
**dadurch gekennzeichnet,**
**dass** das Stützrad zwei in radialer Richtung zwischen Stützradachse (1) und Stützradkörper (2) angeordnete Lager (4, 5), insbesondere Wälzlager, aufweist, und das die Lamellenbremse in axialer Richtung zwischen den Lagern (4, 5) angeordnet ist.

4. Stützrad nach einem der vorigen Ansprüche,
**dadurch gekennzeichnet,**
**dass** das Stützrad zur Energieversorgung der Lamellenbremse (3) eine zwischen Stützradachse (1) und Lager (5), vorzugsweise in einer Hülse (8), verlegte Leitung (9) aufweist.

5. Stützrad nach einem der vorigen Ansprüche,
**dadurch gekennzeichnet,**
**dass** die Ankerteile (11, 11a, 11b, 11c) der Lamellenbremse (3) durch eine erste Verzahnung (17) drehfest mit der Stützradachse (1) verbunden sind.

6. Stützrad nach einem der vorigen Ansprüche,
**dadurch gekennzeichnet,**
**dass** die Rotoren (15) der Lamellenbremse (3) durch eine zweite Verzahnung (16) drehfest mit dem Stützradkörper (2) verbunden sind.

7. Stützrad nach einem der vorigen Ansprüche,
**dadurch gekennzeichnet,**
**dass** die Lamellenbremse (3) eine Notlüfteinrichtung (10) aufweist, vorzugsweise Schrauben, wobei die Lamellenbremse (3) derart gestaltet ist, dass durch die Notlüfteinrichtung (10) die Lamellenbremse (3) geöffnet werden kann.

8. Stützrad nach einem der vorigen Ansprüche,
**dadurch gekennzeichnet,**
**dass** das Stützrad zwischen dem Lager (4) und der Stützradachse (1) eine Hülse (7) aufweist, die derart gestaltet ist, dass sie die Bedienung der Notlüfteinrichtung (10), insbesondere der Schrauben, ermöglicht, insbesondere eine Durchführung für ein Werkzeug zur Bedienung der Notlüfteinrichtung (10), insbesondere der Schraube, aufweist.

9. Flurförderzeug, umfassend mindestens ein Stützrad nach einem der vorigen Ansprüche.

10. Flurförderzeug nach Anspruch 9,
**dadurch gekennzeichnet,**
**dass** das Flurförderzeug eine Steuerung aufweist, die dazu eingerichtet ist, bei Bremsungen im Fahrbetrieb die Bremswirkung zunächst über generatorische Abbremsung über den Antriebsmotor zu erzeugen und die Lamellenbremse (3) zum Abbremsen zuzuschalten, wenn eine definierte Geschwindigkeit unterschritten und/oder eine über die Möglichkeiten der generatorischen Abbremsung hinausgehende Bremswirkung erzielt werden soll.

11. Flurförderzeug nach Anspruch 9 oder 10,
**dadurch gekennzeichnet,**
**dass** das Flurförderzeug eine als Stillstands- und/ oder Not-Aus Bremse ausgeführte Bremse aufweist, die auf das Antriebsrad des Flurförderzeugs wirkt.
